# EUROPEAN PATENT APPLICATION

(11) **EP 4 220 820 A1**
(43) Date of publication of application: **02.08.2023**
(21) Application number: 22154549.4
(22) Date of filing: 01.02.2022
(51) Int. Cl.: H01M 10/613, H01M 10/647, H01M 10/6553, H01M 10/6556, H01M 10/6568, H01M 50/358

(54) **BATTERY SYSTEM WITH ACTIVE COOLING OF VENTING CHANNEL**

(71) Applicant: Samsung SDI Co., Ltd., Yongin-si, Gyeonggi-do 17084 (KR)
(72) Inventor: Pröll, Andreas, 4184 Helfenberg (AT); Pucher, Matthias, 8403 Ragnitz (AT)
(74) Representative: Gulde & Partner

(57) **Abstract**

The present disclosure refers to a battery system (100), comprising a battery pack (10) including a plurality of battery cells (12), a venting device (22) for guiding a venting gas stream exhausted by one or more of the battery cells (12) during a thermal runaway away from the battery cells (12), the venting device (22) comprising a venting channel (24) for guiding the venting gas stream along a main flow direction (M), the venting channel (24) being delimited by a first side (20a) of the venting device (22) and a second side (20b) of the venting device (22) opposite the first side (20a), and one or more venting openings (27) arranged at the first side (20a) of the venting device (22) for allowing the venting gases exhausted by the battery cells (12) to enter the venting channel (24), a cooling device (26) comprising one or more cooling channels (28) for cooling the venting channel (24) via cooling fluid transported through the cooling channels (28), wherein at least one of the cooling channels (28) is arranged at the second side (20b) of the venting device (22)..

## Description

### Field of the Disclosure

The present invention relates to a battery system allowing for a venting gas exhausted in case of a thermal runaway to be kept away from neighboring battery cells and to cool down before leaving the battery system. Further, the present invention relates to a vehicle comprising the battery system and to a single unit venting and cooling device.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, or short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

A state-of-the-art venting concept of a battery is to let the hot venting gas stream of a battery cell in thermal runaway condition expand into the battery housing and escape through a housing venting valve to the outside (the environment of the battery housing). The venting gas stream may comprise hot and toxic venting gas as well as conductive solid matter (material) like graphite powder and metal fragments. Said electrically conductive material may deposit on electrically active parts as terminals and busbars on top of the cells causing short circuits and arcing. Thus, the thermal runaway of one battery cell could cause short circuits and thus a consecutive thermal runaway of other battery cells leading into a complete damage of the battery (the battery pack), the battery system and the vehicle.

To prevent this a venting device covering the venting side of the battery cells may be provided, the venting device comprising a venting channel for leading the venting gas stream away from the battery cells to the outside without any contact to the electrically active parts of the cells. However, there is a risk of deflagration of the venting gas at the housing venting valve which may lead to damage of external components, and which is a risk for any bystanders or service personnel.

From DE 10 2017 212 223 A1 a battery system is known where the venting products in case of a thermal runaway exit the battery cells at the bottom through a cooling plate directly into a channel, wherein a cooling fluid is inserted into the coolant is injected into the venting gas stream.

It is thus an object of the present invention to overcome or reduce at least some of the drawbacks of the prior art and to provide an improved thermal runaway handling, in particular to provide a battery system better protected against the venting products exhausted at a thermal runaway and safer for bystanders.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system comprises a battery pack including a plurality of battery cells, a venting device for guiding a venting gas stream exhausted by one or more of the battery cells during a thermal runaway away from the battery cells along a main flow direction, the venting device comprising a venting channel for guiding the venting gas stream, the venting channel being delimited by a first side of the venting device and a second side of the venting device opposite the first side, and one or more venting openings arranged at the first side of the venting device for allowing the venting gases exhausted by the battery cells to enter the venting channel, a cooling device comprising one or more cooling channels for cooling the venting channel via cooling fluid transported through the cooling channels, wherein at least one of the cooling channels (28) is arranged at the second side of the venting device.

According to another aspect of the present disclosure, a single unit venting and cooling device is provided, the single unit venting and cooling device comprising a venting channel for guiding a venting gas stream, the venting channel being delimited by a first side of the single unit venting and cooling device and a second side of the single unit venting and cooling device opposite the first side, and one or more venting openings arranged at the first side of the single unit venting and cooling device for allowing the venting gases exhausted by the battery cells to enter the venting channel, and comprising one or more cooling channels, wherein at least one of the cooling channels is arranged at the second side of the venting device opposite the first side for cooling the venting channel via cooling fluid transported through the cooling channels.

Yet another aspect of the present disclosure refers to an electric vehicle comprising such a battery system.

Further aspects of the present disclosure could be learned from the dependent claims or the following description. Explanations given and aspects discusses in the following with respect to the battery system apply correspondingly to the single unit venting and cooling device as well and vice versa.

### Brief Description of the Drawings

Features will become apparent to those of ordinary skill in the art by describing in detail exemplary embodiments with reference to the attached drawings in which:
- Fig. 1: illustrates a schematic side view of a battery system according to an embodiment.
- Fig. 2: illustrates a perspective view of the battery system of Fig. 1.
- Fig. 3: illustrates a perspective view of the battery system of Fig. 1.
- Fig. 4: illustrates a perspective view of the battery system of Fig. 1.
- Fig. 5: illustrates a cross-sectional view of the battery system of Fig. 1.
- Fig. 6: illustrates a perspective view of the battery system of Fig. 1.
- Fig. 7: illustrates a schematic side view of a battery system according to another embodiment.
- Fig. 8: illustrates a perspective view of a single unit venting and cooling device according to an embodiment.
- Fig. 9: illustrates a cross-sectional view of the single unit venting and cooling device of Fig. 8.
- Fig. 10: illustrates a cross-sectional view of a single unit venting and cooling device according to an embodiment.
- Fig. 11: illustrates a cross-sectional view of a single unit venting and cooling device according to an embodiment

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper layer of battery cells is positioned at the upper part of the z-axis, whereas the lower layer of battery cells is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided comprising a battery pack including a plurality of battery cells. The battery cells may be interconnected via busbars contacting the respective electrode terminals of the battery cells to form one or more battery modules. The battery cells may e.g. be prismatic or cylindrical cells. The battery cells comprise venting exits at a venting side of the battery cells, which is preferably the terminal side of the battery cells, the venting exits allowing a venting gas stream to escape the battery cells during a thermal runaway. Venting valves may be provided at the venting exits.

The battery system further comprises a venting device arranged at the venting side of the battery cells, the venting device comprising a venting channel for guiding the venting gas stream escaping from the battery cells during a thermal runaway away from cells along a main flow direction towards a system exit so that the venting gas stream may escape to the outside/environment of the battery system or vehicle. The venting channel may be delimited by channel walls formed by the venting device. A first side of the venting device may form a first channel wall and a second side of the venting device opposite the first side may form a second channel wall, wherein the venting channel extends in between the first and second side. The venting device comprises one or more venting openings for allowing the venting gases exhausted by the battery cells to enter the venting channel. The venting openings of the venting device may be aligned with the venting exits of the battery cells. Alternatively, the first channel wall of the first side of the venting device is formed by the cell surface of the battery cell to which the venting device is attached. In other words, the venting channel may be delimited by a channel wall of the venting device on one side and by the venting side of the battery cells on the opposite side. In such an embodiment, the venting exits of the battery cells form the venting openings of the venting device. The venting device receives and encapsulates the whole venting stream thereby protecting any live parts, e.g. the terminals and busbars, of the battery cells. The venting openings are arranged at the first side of the venting device, i.e. in the first channel wall, the first side being arranged opposite the venting side of the battery cells or being formed by the venting side of the battery cells.

The battery system further comprises a cooling device comprising one or more cooling channels for cooling the venting channel via cooling fluid transported through the cooling channels, wherein at least one of the cooling channels is arranged at the second side of the venting device opposite the first side. In other words, the cooling device comprises at least one cooling channel, the at least one cooling channel being arranged at the second side or second channel wall of the venting device. As the first side or first channel wall is arranged at or formed by the venting side of the battery cells and thus the venting exits of the battery cells, the second side or second channel wall is arranged distanced by the venting channel from the venting side of the battery cells and thus the venting exits of the battery cells. In other words, as the first and second side of the venting device are distanced from one another by the venting channel, the cooling channel is distanced from the venting openings by the venting channel as well. The cooling channel is thus arranged opposite the venting openings at the other end of the venting channel. The cooling channel preferably extends in a direction along the venting channel. In other words, the venting channel and the cooling channel have a longitudinal extension along a longitudinal axis. This way cooling fluid may be transported along the length of the venting channel, for example from one end of the venting device to an opposite end of the venting device, which allows for longer contact of the cooling fluid with the outer wall of the venting channel and therefore for a better heat transfer.

The cooling channel(s) may be arranged in contact with an outer wall of the venting channel, i.e. with the second channel wall, so that heat may be transferred from the venting gas to the second channel wall of the venting channel, and from the second channel wall to a cooling channel wall of one or more of the cooling channels and from there to a cooling fluid flowing along the cooling channels. An inner side of the venting channel wall may delimit the venting channel and an outer side of the venting channel wall may delimit at least in part one or more of the cooling channels thus forming part of the cooling channel walls. The cooling fluid may be a phase-changing fluid, e.g. a water-glycol-composition. By utilization of a phase-changing fluid the wall temperature of the fluid channel can be held under a certain temperature (e.g. 130°C) by controlled evaporation (of the water phase in case of a water-glycol-composition).

The cooling channel thus actively cools the second side of the venting device. In case of a thermal runaway, the venting gas stream enters the venting channel at the first side of the venting device through the venting openings, crosses at least in part the venting channel and comes into contact with the opposite second side of the venting device, the venting stream transferring heat to the second side. As the second side is actively cooled, the venting stream is cooled down as well. As a result, the damaged cell which has experienced a thermal runaway is cooled further to ensure its mechanical integrity by removing additional heat from this region. This leads to reduced temperatures in this region and hence heat transfer to neighboring cells and therefore a chain reaction of thermal runaways is reduced. Also, a meltdown of the venting side surface of the battery cells is prevented. Further, the venting gas stream is cooled down significantly before reaching the system outlet and leaving the battery system so that deflagration at the outlet of the battery housing is prevented. This reduces the risk of damage of external components and the risk of injury of any bystanders

According to an aspect of the disclosure, the cooling device comprises a plurality of cooling channels surrounding the venting channel for cooling the venting channel via cooling fluid transported through the cooling channels. Of the plurality of cooling channels at least one is arranged at the second side of the venting device. The cooling channels surrounding the venting channel in particular means that the cooling channels are arranged at multiple sides of the venting channel. For example, cooling channels may be arranged at the first side facing the venting side of the battery cells and at the second side opposite the first side. The venting side may be a terminal side of the battery system, i.e. the side at which the electrical terminals of the battery cells and the busbars connecting the terminals are arranged. Thus, the venting device and the cooling device may be arranged at a terminal side of the battery cells. According to an aspect of the invention, the cooling channel may surround the venting channel from all sides. Thus, cooling channels may be provided in particular at all four sides of the venting channel. The cooling device may encompass the venting channel or the venting device. Providing multiple cooling channels surrounding the venting channel allows for a uniform cooling of the venting device, i.e. the venting channel walls, from all sides not only from one side which also ensures the structural integrity of the venting channel. The (single unit) venting and cooling device with its fluid cooled venting gas thus provides superior venting gas management.

The cooling channel thus actively cools the second side of the venting device the region around the venting channel thereby cooling the venting gas stream flowing through the venting channel. As a result, the damaged cell which has experienced a thermal runaway is cooled further to ensure its mechanical integrity by removing additional heat from this region. This leads to reduced temperatures in this region and hence heat transfer to neighboring cells and therefore a chain reaction of thermal runaways is reduced. Also, a meltdown of the venting side surface of the battery cells is prevented. Further, the venting gas stream is cooled down significantly before reaching the system outlet and leaving the battery system so that deflagration at the outlet of the battery housing is prevented. This reduces the risk of damage of external components and the risk of injury of any bystanders. While in DE 10 2017 212 223 A1 a cooling plate is positioned below the cell, where in the area of the bursting opening of the cell for the venting gases in the cooling plate a device is provided which allows the cooling medium to flow into the venting channel when the gas escapes. In contrast to this, the present invention relates to a cooled venting channel with at least one cooling channel opposite the burst opening. The cooling channel(s) are separated from the venting channel so that there is no fluid exchange between the cooling channel(s) and the venting channel. In particular, no cooling fluid can enter the venting channel and also, preferably, no venting gases the cooling channel(s). With respect to the battery system of DE 10 2017 212 223 A1 the venting gas stream is discharged in a controlled manner and cooled in the process. This arrangement of the cooling channels allows for a uniform cooling of the venting device, i.e. the venting channel walls, from all sides not only from one side which also ensures the structural integrity of the venting channel. The (single unit) venting and cooling device with its fluid cooled venting gas thus provides superior venting gas management.

The venting device may comprise the cooling device. In other words, the one or more cooling channels may be considered to be part of the venting device or the venting device and the cooling device may form a venting and cooling device. According to an aspect of the disclosure, the venting device and the cooling device form a single unit. In other words, the venting device and the cooling device are formed together as one-piece. In particular, the single unit comprising the venting device and the cooling device may be formed together in a common or joint production step. Formed as a single unit may mean an integral connection that cannot be released non-destructively. This way, the venting device and the cooling device and thus the one or more cooling channels and the venting channel may be manufactured simultaneously in an efficient manner and integrally with direct contact between the walls of the one or more cooling channels and the venting channels. In particular, the one or more cooling channels may be separated from the venting channel by a single channel wall. As mentioned above, a first side of this channel wall may form an inner side of the one or more cooling channels and a second side of this channel wall opposite the first side may form an inner side of the venting channel. Such a single unit venting and cooling device allows not only for an easier manufacture but also for a better heat transfer between the venting channel and the one or more cooling channels and thus for a more effective cool down of the venting gas stream. The cooling device, in particular the single unit venting and cooling device, can be modified to be a load carrying component of the housing structure of the battery system.

According to an aspect of the disclosure, the venting device and the cooling device are formed by an extrusion profile. Thus, the venting device and the cooling device may be formed as a single unit via extrusion of a material such as aluminum. Such an (aluminum) extrusion profile is easy to manufacture and allows for the venting device and the cooling device and thus the venting channel and the one or more cooling channels to be formed together in a single production step. An inner profile of the single unit venting and cooling device may delimit the venting channel and outer profile surrounding the inner profile may delimit the one or more cooling channels. The inner profile and the outer profile may be integrally connected with one another, i.e. may form a connection that cannot be released non-destructively. In particular, the one or more cooling channels may be formed between the inner profile and the outer profile. This allows for a particularly efficient production of the single unit venting and cooling device with direct contact between the channel walls of the venting channel and the one or more cooling channels.

According to a respective aspect of the disclosure, an end plate is arranged at the longitudinal end of the single unit venting and cooling device, the end plate closing the venting channel, wherein one or more venting outlets are arranged in the channel wall of the venting channel near the longitudinal end of the venting channel for allowing the venting gas stream to exit the venting channel perpendicular to the main flow direction. When producing the single unit venting and cooling device in a single production step, in particular via extrusion, the venting channel and the one or more cooling channels are open at both ends. The open end of the venting channel according to this aspect is closed by arranging the end plate at the open end. The end plate may be press formed or (laser-)welded to the end of the venting channel. Venting outlets are provided to let the venting gas stream exit the venting channel at a position away from the battery cells. The venting outlets may be formed after the extrusion process e.g. via milling or punching. The venting outlets are preferably provided such that the venting gas stream is directed away from the main flow direction. For example, the venting outlets may be provided at a lower side of the venting channel to let the venting gas stream escape downwards. This embodiment allows for a simple manufacture of the venting channel.

According to a respective aspect of the disclosure, an end cover element is arranged at the longitudinal end of the single unit venting and cooling device, the end cover element covering the end plate and the one or more cooling channels, wherein the end cover element is adapted to allow supply of cooling fluid to the one or more cooling channels. Via the end cover element all of the one or more cooling channels may be covered at their longitudinal end, in particular all of the one or more cooling channels at once. The end cover element may be fixed at the outer profile of the single unit venting and cooling device via e.g. screws or a snap-fit. The end cover element provides a space and a supply line for supplying the cooling fluid simultaneously to preferably all of the cooling channels. The cooling fluid supplied by the end cover element splits into separate streams, one stream per cooling channel. The end plate closing the venting channel prevents any cooling fluid from entering the venting channel. Thanks to this particularly simple arrangement cooling fluid may be efficiently supplied to all of the one or more cooling channels without the risk of cooling fluid entering the venting channel. Of course, an end cover element may instead be provided which covers only the cooling channel. This way two separate end elements may be provided for the venting channel and the one or more cooling channels.

According to an aspect of the disclosure, two cooling channels of the one or more cooling channels extend along the first side of the venting device, wherein the one or more venting openings are arranged between the two cooling channels. In other words, at least two cooling channels may be arranged between the battery cells and the venting channel. Through the venting openings the venting gas stream leaving one or more battery cells may enter the venting channel passing the two cooling channels, i.e. without entering the cooling channels. Thus, the venting gas stream may reach the venting channel although cooling channels are arranged at the first side. The two cooling channels extending along the first side of the venting device and thus the surface of the battery cells are arranged at the venting side of the battery cells and are thus in contact with the battery cells. This way, the cooling device/cooling channels may also serve to directly cool the venting side of the battery cells.

According to an aspect of the disclosure, one or more of the cooling channels are formed by grooves extending into the venting channel. In other words, one or more of the cooling channels may be formed by grooves or indentations in a channel wall delimiting the venting channel, the grooves or indentations extending into the venting channel. In particular, the at least one cooling channel may be formed in the second side or second channel wall of the venting device. Thus, due to these grooves the channel wall delimiting the venting channel may be uneven, the grooves extending into the venting channel such that the venting channel is constricted or narrowed, and the cross-section of the venting channel is reduced. The inner side of such a groove forms part of the inner side of the channel wall of the venting channel and is thus in contact with the venting gas stream, wherein the outer side of such a groove forms part of a cooling channel and is thus in contact with the cooling fluid. This allows for a particularly effective cooling of the venting gas stream. Also, such an arrangement may be easily produced as an extrusion profile. Furthermore, such grooves form the cross-section of the venting channel. Thus, via these grooves the venting channel can be designed in a way that the venting gas stream primarily flows through specific regions.

According to an aspect of the disclosure, a gas splitting projection is arranged inside the venting channel opposite the one or more venting openings, the gas splitting projection being adapted to split the gas stream entering the venting channel through one of the venting openings such that the gas stream is deflected to opposite sides of the venting channel.

The gas splitting projection or protrusion may form part of the second channel wall delimiting the venting channel. The gas splitting projection may split the venting gas stream in two substreams flowing along opposite directions perpendicular to a longitudinal extension of the venting channel. The gas splitting projection may be formed by one of the grooves extending into the venting channel. This way, the groove may serve a double function: Providing a cooling channel and providing the gas splitting projection. The one or more venting openings are preferably arranged in the middle of the venting channel so that the venting gas stream may enter the venting channel in its middle section and may be split into two substreams by the gas splitting projection, wherein the two parts are deflected to opposite sides or outer areas of the venting channel. The gas splitting projection thus allows for an even distribution of the venting gas stream in particular along a width of the venting channel, i.e. in directions perpendicular to a longitudinal extension of the venting channel. This allows for a more effective distribution of the venting gases within the venting channel and thus for a more effective cooling.

According to an aspect of the disclosure, the battery system comprises busbars interconnecting the battery cells via their terminals, wherein the busbars are thermally connected to the cooling device. As mentioned above, the electrode terminals of the battery cells may be interconnected via busbars. These busbars may serve as heat bridges from one battery cell to the next during a thermal runaway. According to this embodiment, the busbars are cooled by the cooling device as well so that an excessive heat transfer from the damaged cell to the neighboring cells via the busbars is prevented. According to a respective aspect of the disclosure, two busbar cooling channels of the plurality of cooling channels are arranged at opposite longitudinal sides of the venting channel, the two busbar cooling channels being thermally connected to the busbars. In other words, the (single unit) venting and cooling device comprises two cooling channels, one at each side ends, that extend along the main flow direction above the busbars. Thus, separate cooling channels may be provided to specifically cool the busbars. These busbar cooling channels also surround the venting channel thereby cooling the venting gas stream. Just like the other cooling channels the busbar cooling channels may be part of the single unit venting and cooling device and may be manufactured via extrusion.

According to an aspect of the disclosure, the plurality of battery cells comprises layers of battery cells stacked on one another, wherein the venting channel is arranged between a first layer and a second layer of battery cells with the venting channel connected to the venting exits of at least one of the first and second layers of battery cells, a first side of the venting device being in thermal contact with or formed by the battery cells of the first layer and a second side of the venting device being in thermal contact with battery cells of the second layer. In other words, the venting and cooling device, in particular the single unit venting and cooling device, may cool two adjacent layers of battery cells at once. In particular, the venting channel may serve to receive and lead away the venting gases of both of these layers of battery cells. This arrangement is space saving and efficient.

According to a respective aspect of the disclosure, a separator element comprising a cooling channel extends vertically from the venting device, in particular from the single unit venting and cooling device, the separator element extending into a gap between two adjacent battery cells of the second layer thereby separating these battery cells. For example, the (single unit) venting and cooling device may be arranged at a top side of a lower layer of battery cells, wherein the separator element extends above into a gap between two battery cells of an upper layer of battery cells. The battery cells of the first and second layer are offset from one another so that the separator element may extend into the gap. The separator separates and cools the neighboring cells of the upper layer due to the cooling fluid flowing along the cooling channel of the separator. According to this embodiment the cooling device, in particular the single unit venting and cooling device, is modified to be able to simultaneously function as bottom and/or side cooler in a multi floor design.

The invention further pertains to an electric vehicle comprising a battery system as described above. The electric vehicle may comprise the battery system as a traction battery.

The invention further pertains to a single unit venting and cooling device comprising a venting channel for guiding a venting gas stream, and one or more venting openings for allowing the venting gases exhausted by the battery cells to enter the venting channel, and comprising a plurality of cooling channels surrounding the venting channel for cooling the venting channel via cooling fluid transported through the cooling channels. The single unit venting and cooling device may be manufactured via an extrusion process and may thus be formed by an (aluminum) extrusion profile as explained above. In particular, the single unit venting and cooling device may be formed by an extrusion profile comprising an inner profile forming the venting channel and an outer profile forming the cooling channels. The first side of the single unit venting and cooling device may be formed by a venting side of one or more battery cells the single unit venting and cooling device may be attached to. Further details of the single unit venting and cooling device have been described above with respect to the battery system.

### Specific Embodiments

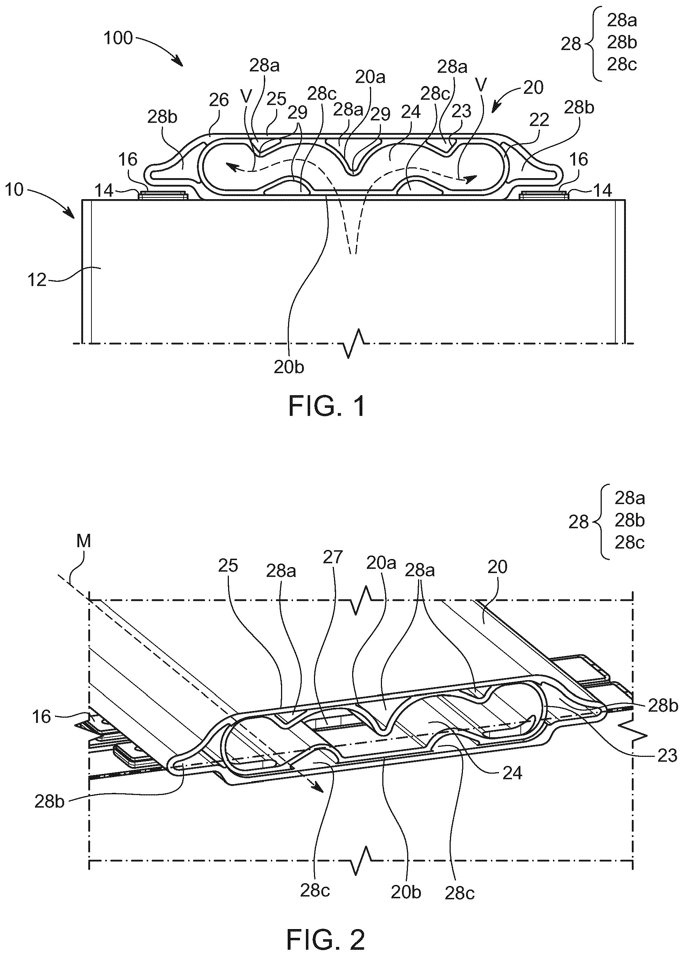

- Fig. 1: illustrates a schematic side view of a battery system according to an embodiment.
- Fig. 2: illustrates a perspective view of the battery system of Fig. 1.

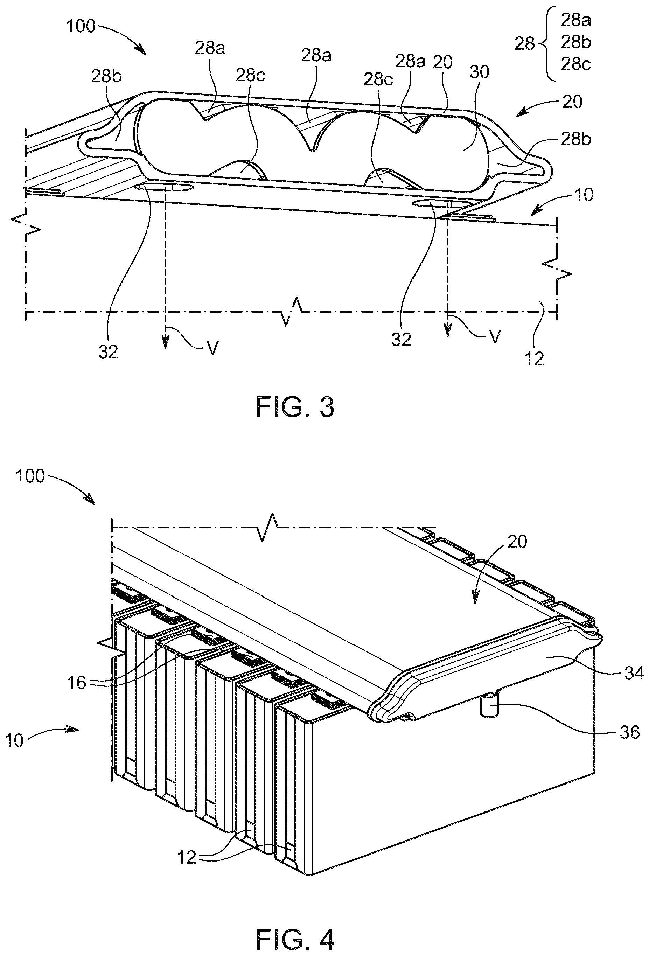

- Fig. 3: illustrates a perspective view of the battery system of Fig. 1.
- Fig. 4: illustrates a perspective view of the battery system of Fig. 1.

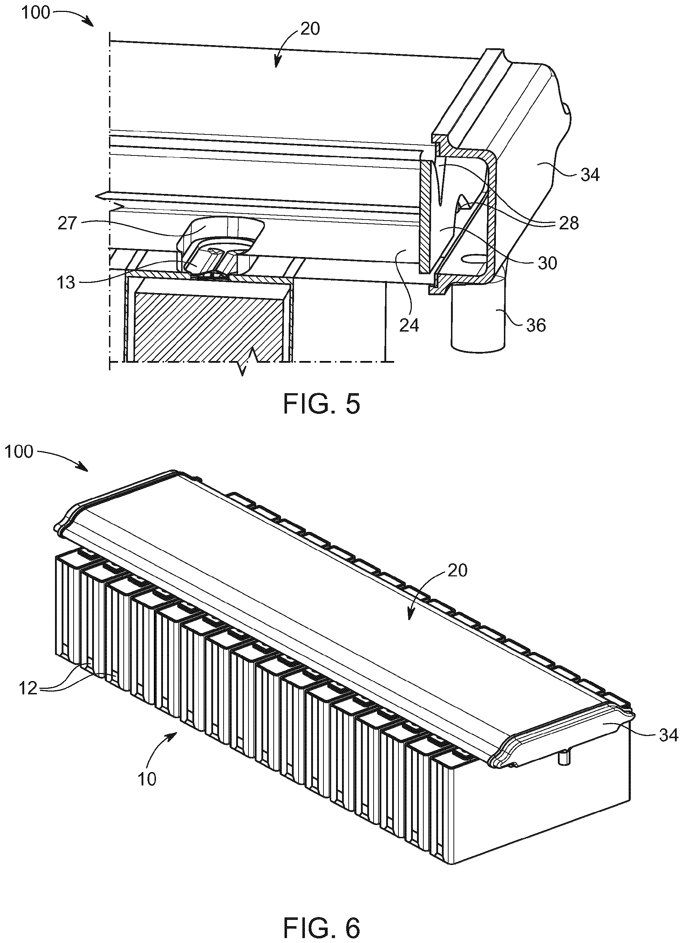

- Fig. 5: illustrates a cross-sectional view of the battery system of Fig. 1.
- Fig. 6: illustrates a perspective view of the battery system of Fig. 1.

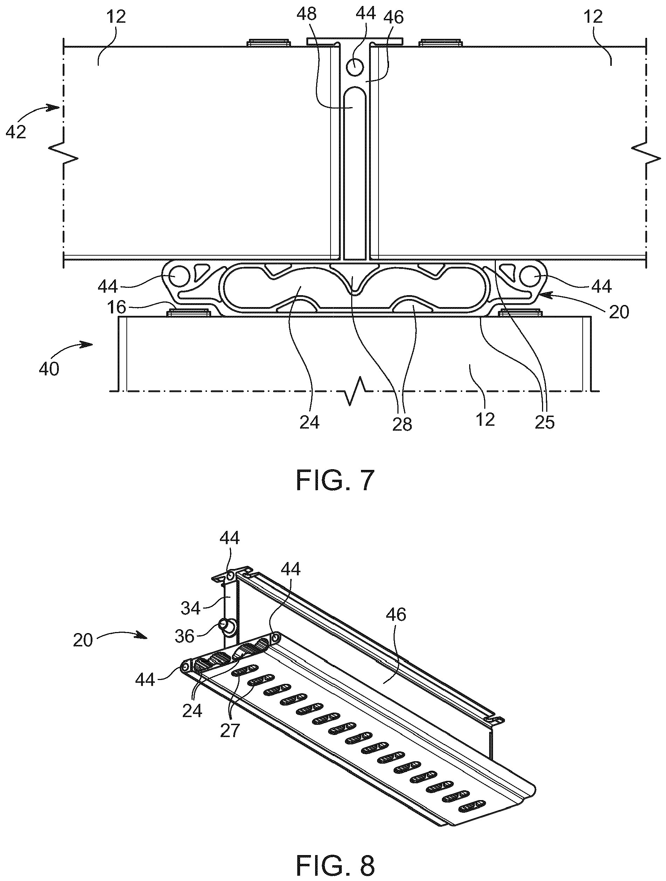

- Fig. 7: illustrates a schematic side view of a battery system according to another embodiment.
- Fig. 8: illustrates a perspective view of a single unit venting and cooling device according to another embodiment.

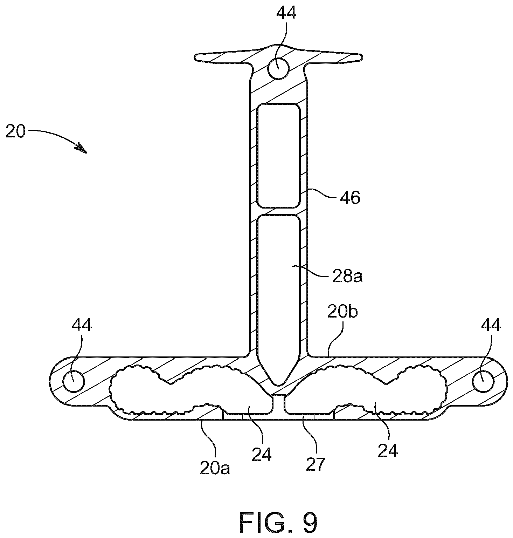

- Fig. 9: illustrates a cross-sectional view of the single unit venting and cooling device of Fig. 8.

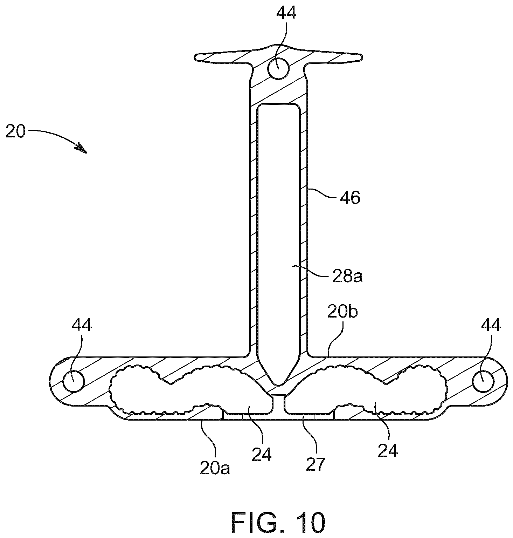

- Fig. 10: illustrates a cross-sectional view of a single unit venting and cooling device according to another embodiment.

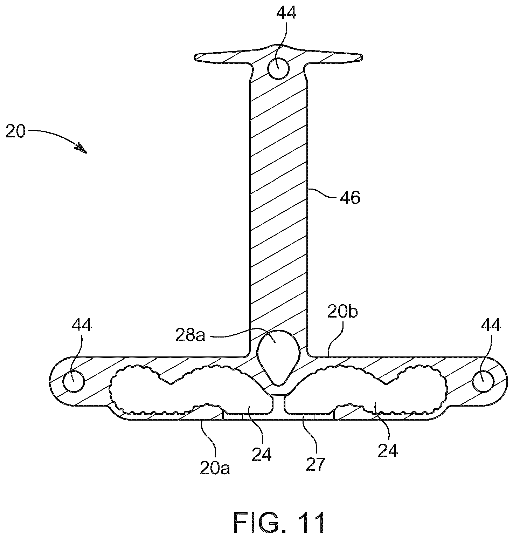

- Fig. 11: illustrates a cross-sectional view of a single unit venting and cooling device according to another embodiment.

Figures 1 to 6 show a battery system 100 according to an embodiment of the invention. The battery system 100 comprises a battery pack 10 including a plurality of battery cells 12 and a single unit venting and cooling device 20 arranged at a venting and terminal side of the battery cells 12. The battery cells 12 comprise electrode terminals 14 interconnected with one another via busbars 16 so as to form battery modules. The single unit venting and cooling device 20 comprises a venting device 22 comprising a venting channel 24 and a cooling device 26 comprising a plurality of cooling channels 28 surrounding the venting channel 24.

The venting channel 24 is delimited by a first side 20a of the single unit venting and cooling device 20 and by a second side 20b of the single unit venting and cooling device 20 opposite the first side 20a. Venting gas streams exiting the battery cells 12 at venting exits 13 during a thermal runaway may enter the venting channel 24 via venting openings 27 arranged at the first side 20a, wherein one of the venting openings 27 can be seen in Fig. 2. These venting openings 27 are aligned with the venting exits 13 of the battery cells 12 as can be seen in Fig. 5. Opposite the venting openings 27 at the second side 20b three cooling channels 28a of the plurality of cooling channels 28 are arranged.

The first side 20a is, however, not necessarily formed by a wall member of the single unit venting and cooling device 20 but may instead be resembled by the cell surface of the battery cell 12 to which the single unit venting and cooling device 20 is attached. The venting side of the battery cells 12 may then be understood as the first side 20a of the single unit venting and cooling device 20. In such an embodiment, the venting exits 13 of the battery cells 12 form the venting openings 27.

The venting device 22 and the cooling device 26 are formed as a single unit via an extrusion process. In particular, the single unit venting and cooling device 20 is realized by an aluminum extrusion profile, wherein an inner profile 23 forms a venting channel wall delimiting the venting channel 24 and an outer profile 25 forms the cooling channels 28. The cooling channels 28 are arranged directly at the outer surface of the inner profile 23 and are thus delimited at one side by the inner profile 23 and on the other side by the outer profile 25. The inner profile 23 has a curved shape with multiples grooves 29 extending into the venting channel 24, the grooves 29 forming the cooling channels 28. In other words, at least some of the cooling channels 28 extend into the venting channel 24. The outer profile 25 has a more even shape for allowing a better surface contact with the battery cells 12. Thus, at least the side of the outer profile 25 being adjacent the venting side of the battery cells 12 may be even.

Two cooling channels 28c extend along a surface of the battery cells 12, wherein the venting openings 27 are arranged between the two cooling channels 28c. A venting gas stream V leaving the battery cells 12 may enter the venting channel 24 through these venting openings 27 passing the cooling channels 28c. The venting stream V then flows to the opposite second side 20b at which the cooling channel 28a is arranged. The groove 29 of a middle cooling channel 28a among the three cooling channels 28a serves as a gas splitting projection opposite the venting openings 27, the gas splitting projection splitting the venting gas stream V entering the venting channel 24 through one of the venting openings 27 such that the gas stream is deflected to opposite longitudinal sides of the venting channel 24 as can be seen in Fig. 1. This way the venting gas stream V is evenly distributed along the width of the venting channel 24.

Subsequently the venting gas stream V is guided along a main flow direction M along a longitudinal extension of the venting channel 24 towards an end side of the venting channel 24, see Fig. 2. Due to the specific form of the venting channel 24 the venting gas stream mainly flows along the opposite longitudinal sides of the venting channel 24. An end plate 30 is arranged at the longitudinal end of the single unit venting and cooling device 20, the end plate 30 closing the venting channel 24 at that end as can be seen in Fig. 3. Two venting outlets 32 are provided extending through the inner profile 23 and the outer profile 25 near the longitudinal end of the venting channel 24 for allowing the venting gas stream to exit the venting channel 24 perpendicular to the main flow direction M.

Further, an end cover element 34 is arranged at the longitudinal end of the single unit venting and cooling device 20, the end cover element 34 covering the end plate 30 and the cooling channels 28 as can be seen in Fig. 4 and 5. The end cover element 34 comprises a supply line 36 for the supply of cooling fluid to the cooling channels 28. The end plate 30 thereby prevents any cooling fluid from entering the venting channel 24.

The single unit venting and cooling device 20 allows for actively cooling the region around the venting channel 24 thereby cooling the venting gas stream flowing through the venting channel 24. As a result, not only the damaged cell which has experienced a thermal runaway is cooled but also the venting gas stream is cooled down significantly before reaching the system outlet and leaving the battery system 100 so that deflagration at the outlet of a battery housing of the battery system may be prevented. This reduces the risk of damage of external components and the risk of injury of any bystanders. The arrangement of the cooling channels surrounding the venting channel allows for a uniform cooling of the venting device, i.e. the venting channel walls. Further, the cooling channels 28b provided at the longitudinal sides of the single unit venting and cooling device 20 cover and cool the busbars 16 thereby preventing thermal propagation from the damaged cell to neighboring cells via the busbars 16.

The invention thus provides a common venting channel for the battery cells to prevent contamination of the electrical connections of the battery system, for cooling of the venting gas to avoid deflagration, cooling of the top cell surface to prevent melt-down of the top cell surface, a temperature reduction of the hottest area of the damaged cell, which is near the venting device, and cooling of the busbars for more efficient emergency cooling.

The single unit venting and cooling device 20 can be modified to be able to simultaneously function as bottom/top and/or side cooler in a multi floor design. A respective embodiment is shown in Fig. 7. Here the plurality of battery cells 12 comprises multiple layers of battery cells stacked on one another, i.e. a lower layer 40 and an upper layer 42. The single unit venting and cooling device 20 is arranged between the lower layer 40 and the upper layer 42, the outer profile 25 being in thermal contact with both layers 40, 42. The venting channel 24 may be connected to the venting exits of at least one of the lower layer 40 and the upper layer 42, preferably with both. This way both the battery cells 12 of the upper layer 42 and of the lower layer 40 may vent into the same venting channel 24. Accordingly, the battery cells 12 of the upper layer 42 may comprise venting exits at their lower side and the battery cells 12 of the lower layer 40 may comprise venting exits at their upper side.

A separator element 46 comprising a cooling channel 48 extends vertically from the single unit venting and cooling device 20, the separator element 46 extending into a gap between two adjacent battery cells 12 of the upper layer 42 thereby separating these battery cells as can be seen in Fig. 7. The separator element 46 separates and cools the neighboring cells 12 of the upper layer 42 due to the cooling fluid flowing along the cooling channel 48 of the separator element 46. According to this embodiment the single unit venting and cooling device 20 is modified to be able to simultaneously function as bottom and/or top cooler in a multi floor design.

In this embodiment, the single unit venting and cooling device 20 comprises mounting holes 44 for structural integration of the single unit venting and cooling device 20 in the battery system/housing. These mounting holes may also be provided with the single unit venting and cooling device according to the first embodiment. The separator element 46 comprises a mounting hole 44 as well.

Instead of multiple cooling channels only one cooling channel 28a may be provided as shown in the embodiments of Fig. 8 to 11. Here, the single unit venting and cooling device 20 comprises one cooling channel 28a arranged at the second side 20b of the single unit venting and cooling device 20, i.e. opposite the venting openings 27. The cooling channel 28a may extend to a different extent into the separation member 46 thus providing fluid domains of different volumes as shown in Fig. 9 to 11.

The single unit venting and cooling device 20 of this embodiment is formed as one-piece as an extrusion profile. In this embodiment the end cover 34 is materially bonded to the profile as can be seen in Fig. 8. Further, the venting channel 24 in this embodiment is split in two parts both of which are accessible for the venting stream via the venting openings 27.

The side of the cell(s) of the upper layer 42 facing the cooled venting channel 24 (top side of venting channel 24 in Fig. 8 to 11) can be cooled via thermal conduction paths in the component to the fluid channel which are realized in this embodiment by a central web in the extrusion profile, where the extrusion profile has been milled away subsequently to form openings for the venting gas streams exiting the venting exits of the upper layer 42.

### Reference signs

- 10: battery pack
- 12: battery cells
- 13: venting exits
- 14: electrode terminals
- 16: busbars
- 20: single unit venting and cooling device
- 20a: first side of single unit venting and cooling device
- 20b: second side of single unit venting and cooling device
- 22: venting device
- 23: inner profile
- 24: venting channel
- 25: outer profile
- 26: cooling device
- 27: venting openings
- 28: cooling channels
- 29: grooves
- 30: end plate
- 32: venting outlets
- 34: end cover element
- 36: supply line
- 40: lower layer of battery cells
- 42: upper layer of battery cells
- 44: mounting holes
- 46: separator element
- 48: cooling channel
- 100: battery system

## Claims

1. A battery system (100), comprising:
a battery pack (10) including a plurality of battery cells (12),
a venting device (22) for guiding a venting gas stream exhausted by one or more of the battery cells (12) during a thermal runaway away from the battery cells (12),
the venting device (22) comprising a venting channel (24) for guiding the venting gas stream along a main flow direction (M), the venting channel (24) being delimited by a first side (20a) of the venting device (22) and a second side (20b) of the venting device (22) opposite the first side (20a), and one or more venting openings (27) arranged at the first side (20a) of the venting device (22) for allowing the venting gases exhausted by the battery cells (12) to enter the venting channel (24),
a cooling device (26) comprising one or more cooling channels (28) for cooling the venting channel (24) via cooling fluid transported through the cooling channels (28), wherein at least one of the cooling channels (28) is arranged at the second side (20b) of the venting device (22).

2. The battery system (100) according to claim 1, wherein the cooling device (26) comprises a plurality of cooling channels (28) surrounding the venting channel (24) for cooling the venting channel (24) via cooling fluid transported through the cooling channels (28).

3. The battery system (100) according to claim 1 or 2, wherein the venting device (22) and the cooling device (26) form a single unit venting and cooling device (20).

4. The battery system (100) according to claim 3, wherein the venting device (22) and the cooling device (26) are formed by an extrusion profile.

5. The battery system (100) according to claim 3 or 4, wherein an end plate (30) is arranged at the longitudinal end of the single unit venting and cooling device (20), the end plate (30) closing the venting channel (24), wherein one or more venting outlets (32) are arranged in a channel wall of the venting channel (24) near the longitudinal end of the venting channel (24) for allowing the venting gas stream to exit the venting channel (24) perpendicular to the main flow direction (M).

6. The battery system (100) according to claim 5, wherein an end cover element (34) is arranged at the longitudinal end of the single unit venting and cooling device (20), the end cover element (34) covering the end plate (30) and the cooling channels (28), wherein the end cover element (34) is adapted to allow supply of cooling fluid to the cooling channels (28).

7. The battery system (100) according to one of the preceding claims, wherein two cooling channels (28c) of the cooling channels (28) extend along the first side (20a) of the venting device (22), wherein the one or more venting openings (27) are arranged between the two cooling channels (28c).

8. The battery system (100) according to one of the preceding claims, wherein one or more of the cooling channels are formed by grooves (29) extending into the venting channel (24).

9. The battery system (100) according to one of the preceding claims, wherein a gas splitting projection (29) is arranged inside the venting channel (24) opposite the one or more venting openings (27), the gas splitting projection (29) being adapted to split the gas stream entering the venting channel through one of the venting openings (27) such that the gas stream is deflected to opposite sides of the venting channel (24).

10. The battery system (100) according to one of the preceding claims, wherein the battery system comprises busbars (16) interconnecting the battery cells (12) via their terminals (14), wherein the busbars (16) are thermally connected to the cooling device (26).

11. The battery system (100) according to claim 9, wherein two busbar cooling channels (28b) of the one or more cooling channels (28) are arranged at opposite longitudinal sides of the venting channel (24), the two busbar cooling channels (28b) being thermally connected to the busbars (16).

12. The battery system (100) according to one of the preceding claims, wherein the plurality of battery cells (12) comprises layers of battery cells (12) stacked on one another, wherein the venting channel (24) is arranged between a first layer (40) and a second layer (42) of battery cells (12) with the venting channel (24) connected to the venting exits (32) of at least one of the first and second layers (40, 42) of battery cells (12), a first side of the venting device (22) being in thermal contact with the battery cells (12) of the first layer (40) and a second side of the venting device (22) being in thermal contact with the battery cells of the second layer (42).

13. The battery system (100) according to claim 11, wherein a separator element (46) comprising a cooling channel (48) extends vertically from the venting device (22), the separator element (46) extending into a gap between two adjacent battery cells (12) of the second layer (42) thereby separating these battery cells (12).

14. An electric vehicle comprising the battery system (100) according to any one of the preceding claims.

15. A single unit venting and cooling device (20) comprising a venting channel (24) for guiding a venting gas stream, the venting channel (24) being delimited by a first side (20a) of the single unit venting and cooling device (20) and a second side (20b) of the single unit venting and cooling device (20) opposite the first side (20a), and one or more venting openings (27) arranged at the first side (20a) of the single unit venting and cooling device (20) for allowing the venting gases exhausted by the battery cells (12) to enter the venting channel (24), and comprising one or more cooling channels (28) for cooling the venting channel (24) via cooling fluid transported through the cooling channels (28), wherein at least one of the cooling channels (28) is arranged at the second side (20b) of the single unit venting and cooling device (20).

## Amended claims

### Amended claims in accordance with Rule 137(2) EPC.

1. A battery system (100), comprising:
a battery pack (10) including a plurality of battery cells (12),
a venting device (22) for guiding a venting gas stream exhausted by one or more of the battery cells (12) during a thermal runaway away from the battery cells (12),
the venting device (22) comprising a venting channel (24) for guiding the venting gas stream along a main flow direction (M), the venting channel (24) being delimited by a first side (20a) of the venting device (22) and a second side (20b) of the venting device (22) opposite the first side (20a), and one or more venting openings (27) arranged at the first side (20a) of the venting device (22) for allowing the venting gases exhausted by the battery cells (12) to enter the venting channel (24),
a cooling device (26) comprising one or more cooling channels (28) for cooling the venting channel (24) via cooling fluid transported through the cooling channels (28), wherein at least one of the cooling channels (28) is arranged at the second side (20b) of the venting device (22),
wherein the venting device (22) and the cooling device (26) form a single unit venting and cooling device (20).

2. The battery system (100) according to claim 1, wherein the cooling device (26) comprises a plurality of cooling channels (28) surrounding the venting channel (24) for cooling the venting channel (24) via cooling fluid transported through the cooling channels (28).

3. The battery system (100) according to claim 1, wherein the venting device (22) and the cooling device (26) are formed by an extrusion profile.

4. The battery system (100) according to one of the preceding claims, wherein an end plate (30) is arranged at the longitudinal end of the single unit venting and cooling device (20), the end plate (30) closing the venting channel (24), wherein one or more venting outlets (32) are arranged in a channel wall of the venting channel (24) near the longitudinal end of the venting channel (24) for allowing the venting gas stream to exit the venting channel (24) perpendicular to the main flow direction (M).

5. The battery system (100) according to claim 4, wherein an end cover element (34) is arranged at the longitudinal end of the single unit venting and cooling device (20), the end cover element (34) covering the end plate (30) and the cooling channels (28), wherein the end cover element (34) is adapted to allow supply of cooling fluid to the cooling channels (28).

6. The battery system (100) according to one of the preceding claims, wherein two cooling channels (28c) of the cooling channels (28) extend along the first side (20a) of the venting device (22), wherein the one or more venting openings (27) are arranged between the two cooling channels (28c).

7. The battery system (100) according to one of the preceding claims, wherein one or more of the cooling channels are formed by grooves (29) extending into the venting channel (24).

8. The battery system (100) according to one of the preceding claims, wherein a gas splitting projection (29) is arranged inside the venting channel (24) opposite the one or more venting openings (27), the gas splitting projection (29) being adapted to split the gas stream entering the venting channel through one of the venting openings (27) such that the gas stream is deflected to opposite sides of the venting channel (24).

9. The battery system (100) according to one of the preceding claims, wherein the battery system comprises busbars (16) interconnecting the battery cells (12) via their terminals (14), wherein the busbars (16) are thermally connected to the cooling device (26).

10. The battery system (100) according to claim 9, wherein two busbar cooling channels (28b) of the one or more cooling channels (28) are arranged at opposite longitudinal sides of the venting channel (24), the two busbar cooling channels (28b) being thermally connected to the busbars (16).

11. The battery system (100) according to one of the preceding claims, wherein the plurality of battery cells (12) comprises layers of battery cells (12) stacked on one another, wherein the venting channel (24) is arranged between a first layer (40) and a second layer (42) of battery cells (12) with the venting channel (24) connected to the venting exits (32) of at least one of the first and second layers (40, 42) of battery cells (12), a first side of the venting device (22) being in thermal contact with the battery cells (12) of the first layer (40) and a second side of the venting device (22) being in thermal contact with the battery cells of the second layer (42).

12. The battery system (100) according to claim 11, wherein a separator element (46) comprising a cooling channel (48) extends vertically from the venting device (22), the separator element (46) extending into a gap between two adjacent battery cells (12) of the second layer (42) thereby separating these battery cells (12).

13. An electric vehicle comprising the battery system (100) according to any one of the preceding claims.

14. A single unit venting and cooling device (20) comprising a venting channel (24) for guiding a venting gas stream, the venting channel (24) being delimited by a first side (20a) of the single unit venting and cooling device (20) and a second side (20b) of the single unit venting and cooling device (20) opposite the first side (20a), and one or more venting openings (27) arranged at the first side (20a) of the single unit venting and cooling device (20) for allowing the venting gases exhausted by the battery cells (12) to enter the venting channel (24), and comprising one or more cooling channels (28) for cooling the venting channel (24) via cooling fluid transported through the cooling channels (28), wherein at least one of the cooling channels (28) is arranged at the second side (20b) of the single unit venting and cooling device (20).
